# EUROPÄISCHE PATENTSCHRIFT

(11) **EP 0 753 112 B1**
(45) Veröffentlichungstag und Bekanntmachung des Hinweises auf die Patenterteilung: **29.07.1998**
(21) Anmeldenummer: 95913162.4
(22) Anmeldetag: 25.03.1995
(51) Int. Cl.: F16H 37/04

(54) **GETRIEBE, INSBESONDERE FÜR EIN KRAFTFAHRZEUG**
GEARBOX, ESPECIALLY FOR A MOTOR VEHICLE
BOITE DE VITESSES, NOTAMMENT POUR VEHICULE A MOTEUR

(30) Priorität: 30.03.1994 DE 4411114
(43) Veröffentlichungstag der Anmeldung: 15.01.1997
(73) Patentinhaber: ZF FRIEDRICHSHAFEN Aktiengesellschaft, 88038 Friedrichshafen (DE)
(72) Erfinder: KUHN, Walter, D-88045 Friedrichshafen (DE)
(86) Internationale Anmeldenummer: EP9501131
(87) Internationale Veröffentlichungsnummer: WO9527158

(56) Entgegenhaltungen:
- DE-A- 2 921 169
- DE-A- 3 026 742
- FR-A- 2 255 512
- GB-A- 657 228
- GB-A- 2 032 543
- GB-A- 2 096 251

## Beschreibung

Die Erfindung bezieht sich auf ein Getriebe, insbesondere für ein Kraftfahrzeug.

Bekanntlich hat ein Getriebe die Aufgabe, die Betriebsbedingungen zwischen einem Antriebsmotor und einem Kraftfahrzeug möglichst gut einander anzupassen. Die unterschiedlichen Einsatzbedingungen eines Kraftfahrzeugs (beladen, unbeladen, Stadt-, Land-, Autobahn- und Bergfahrt usw.) erfordern einen großen Zugkraft- und Geschwindigkeitsbereich. Um das Zugkraft-Geschwindigkeits-Diagramm nach Möglichkeit vollständig auszunutzen, ist ein Getriebe mit mindestens vier oder mehr Gängen erforderlich bzw. wünschenswert. Im allgemeinen ist der Antriebsstrang eines Kraftfahrzeugs so ausgelegt, daß die Höchstgeschwindigkeit in der Ebene bei maximaler Motorleistung erreicht wird. Die Endgeschwindigkeit und die Fahrleistungen sind abhängig vom Fahrwiderstand des Kraftfahrzeugs. Um eine höhere Fahrgeschwindigkeit zu erreichen, ohne hierbei Nachteile in der Fahrleistung im unteren und mittleren Geschwindigkeitsbereich in Kauf zu nehmen, ist es üblich geworden, handgeschaltete Getriebe mit fünf Gängen einzusetzen.

Ferner sind Getriebe mit einer zusätzlichen Gangstufe (Overdrive) bekannt (GB-A 657 228).

Der Overdrive kann so ausgelegt werden, daß durch eine Absenkung der Motordrehzahl in einem verbrauchsoptimierten Bereich gefahren werden kann. Ob der an sich gegebene Vorteil eines Overdrive ausgenutzt wird, hängt stark vom jeweiligen Fahrertyp ab. Ein wenig schaltfreudiger Fahrer wird von einem vorhandenen Overdrive in der Regel keinen Gebrauch machen.

Aus der DE-A 28 42 390 ist eine elektronische Schaltvorrichtung für die Betätigung eines Overdrive bekanntgeworden, die ein Umschalten eines Schaltmusters erlaubt. Auf diese Weise kann der Fahrer des Kraftfahrzeugs, je nachdem, ob eine wirtschaftliche oder eine leistungsorientierte Fahrweise gewünscht wird, die Umschaltbedingungen des Overdrive einstellen. Hierbei wird der Overdrive durch einen zusätzlichen Schalter im Schalthebel vom Fahrer betätigt, wobei durch einen Kontakt im Getriebe gewährleistet ist, daß der Overdrive nur eingeschaltet werden kann, wenn zuvor der höchste Gang eingelegt war.

Aus der DE-A 30 26 742 ist ein Verfahren für einen Motoreingriff beim Gangwechsel eines Stufengetriebes bekanntgeworden. Das Stufengetriebe ist als handgeschaltetes Getriebe mit einem zusätzlichen Overdrive ausgebildet. Der Overdrive wird durch eine automatische Getriebesteuerung in Abhängigkeit von Fahrzeugparametern ein- und ausgeschaltet. Der bekannte Vorschlag befaßt sich mit dem Motoreingriff beim Zu- oder Abschalten des Overdrive, um einen möglichst weichen Schaltvorgang zu erzielen. Über die Ausbildung des Stufengetriebes selbst wird nichts näheres ausgeführt.

Aus der DE-A 29 21 169 ist ferner ein mehrgängiges, synchronisiertes Handschaltgetriebe bekanntgeworden, das vier Gänge und zum dritten und vierten Gang je einen Overdrive aufweist. Den Gangrädern für den dritten und vierten Gang ist ein zusätzliches Gangradpaar zugeordnet. Dieses Gangradpaar wird über eine vorzugsweise hydraulisch betätigbare Lamellenkupplung zu- oder abgeschaltet. Bei geschlossener Kupplung und geschaltetem dritten oder vierten Gang ist die längere Übersetzung des Gangradpaares wirksam. Wird die Kupplung geöffnet (beim Niedertreten des Gaspedals), wird aus dem Overdrive in die direkte, kürzere Übersetzung des geschalteten dritten oder vierten Ganges zurückgeschaltet, was praktisch einem Zurückschalten in einen niedrigeren Gang entspricht.

Bei der vorstehend erläuterten Konzeption eines Getriebes ist nachteilig, daß der Fahrer insofern klare Verhältnisse vermißt, als er nach einiger Zeit nicht mehr weiß, ob er nun zum Beispiel im dritten Gang oder im dritten Gang mit zugeschaltetem Overdrive fährt. Er weiß nun nicht, ob er unter bestimmten Verhältnissen schalten soll oder nicht. Will der Fahrer beispielsweise vom dritten Gang in den vierten Gang schalten, kann sich der dritte Gang-Overdrive für ihn unerwartet zuschalten. Die fehlende Übersicht kann dazu führen, daß der Fahrer zudem über einen längeren Zeitraum im falschen Gang fährt.

Aus der GB 2 096 251 A1, die die Merkmale des Oberbegriffs von Anspruch 1 zeigt, ist ein Gruppenschaltgetriebe für landwirtschaftlich genutzte Fahrzeuge bekannt, das sich aus einem Lastschaltgetriebe und einem Schiebe-Zahnradgetriebe zusammensetzt. Bei letzterem werden Zahnräder selektiv durch axiales Verschieben auf der Abtriebswelle mit Festrädern einer Vorgelegewelle in Eingriff gebracht oder die Abtriebswelle über Klauen mit der Abtriebswelle direkt durchgeschaltet. Diese Art der Schaltung ist aber im Straßenverkehr ungeeignet, da die Gänge bei Zahn-auf-Zahn-Stellung der Zahnräder nicht geschaltet werden können und die Drehzahl der Wellen nur durch Zwischengasgeben synchronisiert werden kann.

Der Erfindung liegt die Aufgabe zugrunde, ein Getriebe mit einem großen Übersetzungsbereich zu schaffen, das in den unteren Gängen in einer für den Fahrer gewohnten Weise manuell geschaltet werden kann mit zusätzlichen Overdrive-Gängen, die sich an den größten Gang anschließen. Dieses Getriebe soll sich insbesondere durch ein niedriges Gewicht und einen kleinen Bauraum bei niedrigen Herstellkosten auszeichnen.

Die der Erfindung zugrunde liegende Aufgabe löst ein Getriebe gemäß den Merkmalen des Anspruchs 1, insbesondere für ein Kraftfahrzeug, das als Gruppenschaltgetriebe ausgebildet ist, dessen Basis durch ein Synchronschaltgetriebe mit weniger als fünf Gängen gebildet ist und das durch ein Lastschaltgetriebe ergänzt ist zu einem: handschaltbaren Getriebe mit mindestens fünf Gängen und mindestens zwei Overdrive-Gängen, die bei geschaltetem höchsten Gang selbsttätig zu- und abschaltbar sind. Ein derartiges Gruppengetriebe reduziert einerseits den für ein Handschaltgetriebe erforderlichen Aufwand auf ein Minimum. Für ein 5-Gang-Getriebe mit zwei zusätzlichen Overdrive-Gängen hat das als Basis verwendete Synchronschaltgetriebe lediglich drei Gänge. Im lastschaltbaren Teil werden insgesamt drei kraftschlüssige Schaltelemente, zum Beispiel Lamellenkupplungen, eingesetzt, wovon eine dieser Kupplungen als Anfahrkupplung Verwendung findet. Auch für diesen Teil des Getriebes gilt, daß der erforderliche Aufwand auf ein Minimum reduziert ist. Durch die vorgeschlagene Kombination eines Synchronschaltgetriebes mit einem Lastschaltgetriebe besteht für den Konstrukteur die Möglichkeit, sieben geeignete Gänge auszuwählen. Hierbei ist der Stufensprung in den unteren Gängen größer, während er in den oberen Gängen abnimmt. Wenn die im Lastschaltgetriebe eingesetzten Kupplungen als schlupfgeregelte Kupplungen, beispielsweise als naß laufende Lamellenkupplungen ausgebildet sind, hat dies den Vorteil, daß bei Auftreten von Drehschwingungen ansonsten notwendige Torsionsdämpfer bzw. ein Zweimassen-Schwungrad nicht erforderlich ist. Trotz des großen Übersetzungsbereichs liegen für den Fahrer klare Verhältnisse vor, da sich das Getriebe für ihn, zumindest was die manuelle Schaltung anbelangt, als herkömmliches 5-Gang-Getriebe darbietet. Hierbei ist es durchaus von Vorteil, daß die Overdrive-Gänge erst dann wirksam werden können, wenn der größte Gang geschaltet ist. Andererseits ist der Fahrer bei entsprechenden Voraussetzungen dazu gezwungen, bewußt aus dem größten in einen niedrigeren Gang zurückzuschalten.

Weitere für die Erfindung wesentliche Merkmale sowie die daraus resultierenden Vorteile sind der nachfolgenden Beschreibung mehrerer Ausführungsbeispiele der Erfindung zu entnehmen.
Es zeigen:
- Fig. 1: ein Getriebeschema eines ersten Ausführungsbeispiels eines Gruppenschaltgetriebes;
- Fig. 2: ein Getriebeschema eines zweiten Ausführungsbeispiels eines Gruppenschaltgetriebes;
- Fig. 3: eine Übersicht in Tabellenform mit den Übersetzungen, Stufensprüngen und Schaltzuständen der Gruppenschaltgetriebe nach den Fig. 1 und 2 und
- Fig. 4: eine mögliche Ausführungsform einer Getriebesteuerung unter Verwendung einer elektronischen Getriebesteuerung und mechanischen Betätigungselementen.

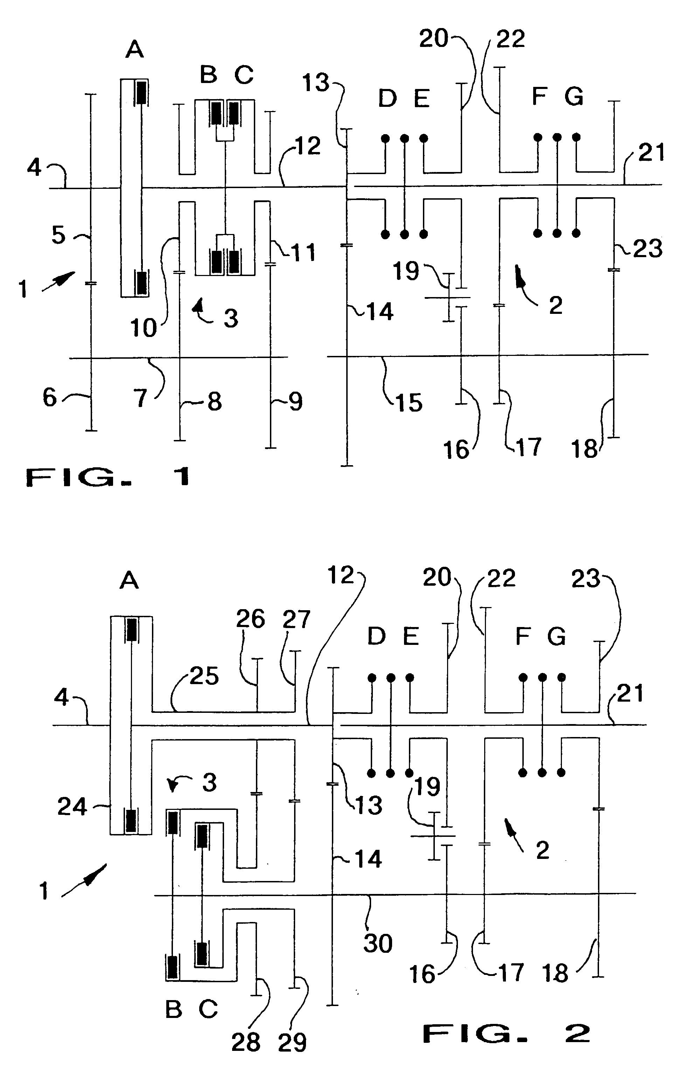

Das in Fig. 1 schematisch wiedergegebene Gruppenschaltgetriebe 1 setzt sich aus einem Synchronschaltgetriebe 2 und einem Lastschaltgetriebe 3 zusammen.

Das allgemeine Konstruktionsprinzip besteht in der Anweisung, ein Synchronschaltgetriebe 2 mit weniger als fünf Gängen als Basis zu verwenden und dieses durch ein Lastschaltgetriebe 3 zum Gruppenschaltgetriebe 1 zu ergänzen. Dieses Gruppenschaltgetriebe soll mindestens fünf manuell zu schaltende Gänge aufweisen. An den höchsten geschalteten Gang sollen sich mindestens zwei Overdrive-Gänge anschließen, die in Abhängigkeit bestimmter Betriebsparameter selbsttätig zu- und abschaltbar sind.

Die Gänge 1 bis 5 und der Rückwärtsgang können vom Fahrer über einen Schalthebel - vorzugsweise nach dem üblichen Schaltmuster mit drei Schaltgassen, in denen sich jeweils benachbarte Gänge gegenüberliegen - manuell ausgewählt werden.

Bei dem erläuterten Ausführungsbeispiel handelt es sich um ein Gruppenschaltgetriebe 1, das aus einem Synchronschaltgetriebe 2 mit drei Gängen und einem Lastschaltgetriebe 3 mit ebenfalls drei Gängen gebildet ist. Aus der Anzahl der möglichen neun Gänge werden die nach Übersetzung und Stufensprung geeigneten Gänge selektiert, und zwar: fünf Gänge, die handgeschaltet werden und zwei Overdrive-Gänge, die sich an den höchsten Gang anschließen und selbsttätig zu- und abschaltbar sind.

Eine Eingangswelle 4 steht mit einem selbst nicht dargestellten motorischen Antrieb in Antriebsverbindung. Die Antriebsleistung fließt über eine Konstante, bestehend aus Festrädern 5 und 6, auf eine Vorgelegewelle 7.

Auf der Vorgelegewelle 7 sind weitere Festräder 8 und 9 angeordnet, die in ständig kämmender Verbindung mit Losrädern 10 und 11 stehen. Die Losräder 10 und 11 sind auf einer Zwischenwelle 12 drehbar gelagert. Den Losrädern 10 und 11 sind vorzugsweise hydraulisch betätigbare Kupplungen B und C zugeordnet. Mit Hilfe dieser Kupplungen B, C können die Gangwechsel mit hoher Schaltqualität unter Last ohne Zugkraftunterbrechung vollzogen werden.

Bei geschalteter Kupplung B ist das Losrad 10 und bei geschalteter Kupplung C ist das Losrad 11 drehfest mit der Zwischenwelle 12 verbunden.

Eine weitere Kupplung A ist den Kupplungen B und C parallel geschaltet. Auch die Kupplung A wird vorzugsweise hydraulisch betätigt; im beschriebenen Fall findet die Kupplung A als Anfahrkupplung Verwendung. Bei geschlossener Kupplung A ist die Eingangswelle 4 mit der Zwischenwelle 12 zur Übertragung der Antriebsleistung verbunden.

Ein Festrad 13 (in der Zeichnung rechts liegend) ist drehfest mit der Zwischenwelle 12 verbunden. Das Festrad 13 zählt zum Synchronschaltgetriebe 2. Die Zwischenwelle 12 bildet somit auch die Eingangswelle des Synchronschaltgetriebes 2. Das Festrad 13 steht mit einem weiteren Festrad 14 auf einer Vorgelegewelle 15 in ständig kämmender Verbindung. Neben dem Festrad 14 sind auf dieser Vorgelegewelle weitere Festräder 16, 17 und 18 drehfest angeordnet.

Das Festrad 16 treibt - unter Umkehr der Drehrichtung - über ein Wenderad 19 ein Losrad 20. Das Losrad 20 ist auf einer Abtriebswelle 21 drehbar gelagert.

Das Festrad 17 steht mit einem Losrad 22 und das Festrad 18 mit einem Losrad 23, die beide ebenfalls auf der Abtriebswelle 21 drehbar gelagert sind, in ständigem Zahneingriff.

Zwischen dem Festrad 13 und dem Losrad 20 sowie dem Losrad 22 und dem Losrad 23 sind Synchronisationspakete angeordnet, die in der üblichen Weise ausgebildet sind und Synchronschaltkupplungen D, E und F sowie G aufweisen. Bei diesen Synchronschaltkupplungen D, E, F und G handelt es sich um die formschlüssigen Schaltelemente des Synchronschaltgetriebes 2.

Die Kupplungen A, B und C des Lastschaltgetriebes 3 sind vorzugsweise hydraulisch betätigbar. Ferner kann es sich bei diesen Kupplungen um naß laufende Lamellenkupplungen handeln, deren Schlupf darüber hinaus geregelt werden kann. Wird der Schlupf der Kupplungen geregelt, können auftretende Torsionsschwingungen abgebaut werden. Besondere Torsionsdämpfer bzw. ein Zweimassen-Schwungrad können daher entfallen. Die Kupplung A findet als Anfahrkupplung Verwendung; vorzugsweise wird sie durch Federkraft im Schließsinne betätigt und hydraulisch gegen diese Federkraft geöffnet. Eine besondere Parksperre kann daher entfallen.

Ein Gruppenschaltgetriebe 1, dem das Getriebeschema nach Fig. 2 zugrunde liegt, unterscheidet sich zwar in der konstruktiven Ausführung von dem Gruppenschaltgetriebe nach Fig. 1. Übereinstimmend setzt sich dieses Gruppenschaltgetriebe 1 aus dem Synchronschaltgetriebe 2 als Basis und dem Lastschaltgetriebe 3 zusammen.

Im Lastschaltgetriebe 3 unterscheidet sich diese Konstruktion von derjenigen nach Fig. 1 wie folgt:

Die Getriebeeingangswelle 4 ist über ein Gehäuse 24 der Kupplung A drehfest mit einer Hohlwelle 25 verbunden. Die Hohlwelle 25 trägt Festräder 26 und 27. Das Festrad 26 kämmt mit einem Losrad 28, das der Kupplung B zugeordnet ist, während das Festrad 27 mit einem Losrad 29, das der Kupplung C zugeordnet ist, im Eingriff steht.

Bei geschlossener Kupplung B fließt die Leistung über das Festrad 26 und das Losrad 28 auf eine Vorgelegewelle 30. Analog hierzu fließt bei geschlossener Kupplung C die Leistung über das Festrad 27 und das Losrad 29 auf die Vorgelegewelle 30. Aus der Zeichnung ist ersichtlich, daß die Vorgelegewelle 30 dem Lastschaltgetriebe 3 und dem Synchronschaltgetriebe 2 gleichermaßen zugehört.

Im übrigen fließt die Leistung bei geschlossener Kupplung A über die Zwischenwelle 12, die konzentrisch liegend zur Hohlwelle 25 gelagert ist. Auch hier kämmt das Festrad 13 der Zwischenwelle 12 mit dem Festrad 14, das aber hier drehfest mit der Vorgelegewelle 30 verbunden ist. Der Aufbau stimmt im übrigen ansonsten mit dem Gruppenschaltgetriebe nach Fig. 1 überein. Für die gleichen Fest- bzw. Losräder, angeordnet auf der Vorgelegewelle 30 bzw. der Abtriebswelle 21, werden daher die gleichen Bezugsziffern verwendet.

Durch die räumliche Anordnung der Kupplungen B und C in einem peripheren Bereich des Gruppenschaltgetriebes können diese auch als Trockenreibungskupplungen ausgebildet sein. Von besonderem Vorteil ist bei dieser Konstruktion die gute Zugänglichkeit zu den Kupplungen B und C.

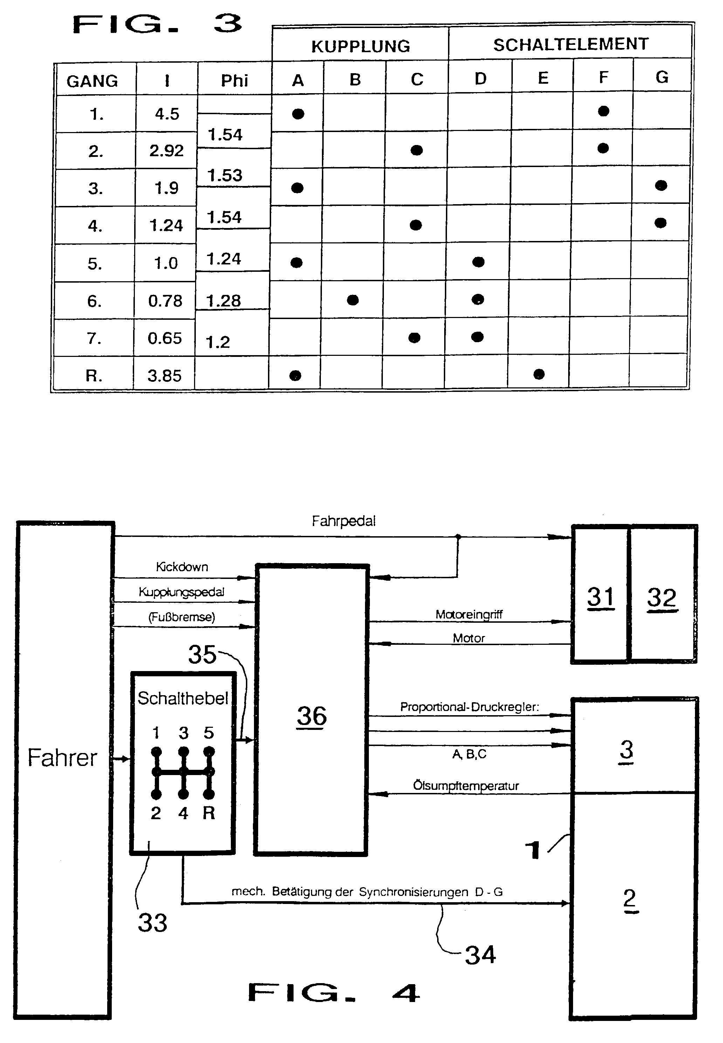

Aus der tabellarischen Übersicht nach Fig. 3 ist - bezogen auf die einzelnen Gänge 1 bis 7 bzw. den Rückwärtsgang R - die Übersetzung (Verhältnis der Winkelgeschwindigkeit des treibenden Zahnrades zum getriebenen Zahnrad), der Stufensprung (Verhältnis zweier benachbarter Übersetzungen) und die Schaltzustände der Kupplungen A, B und C sowie der Synchronschaltkupplungen - Schaltelemente D, E, F und G - ersichtlich.

Aus den möglichen neun Gängen des kombinierten Synchron- und Lastschaltgetriebes wurden die Gänge mit feiner Abstufung des Lastschaltgetriebes bzw. mit groberer Abstufung des Synchronschaltgetriebes ausgewählt:

| Gang | Übersetzung | Kupplung | Schaltelement |
|---|---|---|---|
| 1 | i = 4,50 | A geschlossen | F betätigt |
| 2 | i = 2,92 | C geschlossen | F betätigt |
| | | | Φ₁₂ = 1,54 |
| 3 | i = 1,90 | A geschlossen | G betätigt |
| | | | Φ₂₃ = 1,53 |
| 4 | i = 1,24 | C geschlossen | G betätigt |
| | | | Φ₃₄ = 1,54 |
| 5 | i = 1,00 | A geschlossen | D betätigt |
| | | | Φ₄₅ = 1,24 |
| 6 | i = 0,78 | B geschlossen | D betätigt |
| | | | Φ₅₆ = 1,28 |
| 7 | i = 0,65 | C geschlossen | D betätigt |
| | | | Φ₆₇ = 1,20 |

Die Gangschaltungen 1-2, 3-4, 5-6 und 6-7 erfolgen somit im Lastschaltgetriebe, während die Gangschaltungen 2-3 und 4-5 sowohl im Lastschalt- als auch im Synchronschaltgetriebe erfolgen. Die Schaltungen der Overdrive-Gänge 5-6 und 6-7 erfolgen in Abhängigkeit ausgewählter Betriebsparameter selbsttätig.

Durch die aus dem höchsten Gang - im beschriebenen Ausführungsbeispiel dem 5. Gang - selbsttätig unter Last zu- und abschaltbaren Overdrive-Gänge ist eine hohe Schaltqualität gegeben. Dies macht sich in einem außerordentlich hohen Fahrkomfort bemerkbar.

Die zusätzlichen Overdrive-Gänge können so ausgelegt werden, daß durch Absenkung der Motordrehzahl eine verbrauchsökonomische Fahrweise gewährleistet ist. Hierbei werden Höchstgeschwindigkeitsgrenzen nicht überschritten.

Die Fig. 4 zeigt in schematisierter Darstellung eine mögliche Ausführung einer Getriebesteuerung. Der Fahrer hat mehrere Möglichkeiten, einer Motorelektronik 31 eines Motors 32 bzw. dem Gruppenschaltgetriebe 1 einen Leistungswunsch anzumelden. Hierzu dient in erster Linie das Fahrpedal (Gaspedal, Drosselklappenstellung) und ein Schalthebel 33, der über eine mechanische Verbindung 34 auf die Synchronschaltkupplungen D, E, F und G des Synchronschaltgetriebes 2 einwirkt. Vom Schalthebel 33 besteht ferner eine Verbindung 35 zu einer elektronischen Getriebesteuerung 36. Über diese Verbindung wird der elektronischen Getriebesteuerung die aktuelle Position des Schalthebels 33 mitgeteilt. Ferner empfängt die elektronische Getriebesteuerung 36 Eingangssignale (zum Beispiel Kick-down, Stellung des Kupplungspedals, Bremsschalter ein/aus usw.), die vom Fahrer initiiert werden. Von der Motorelektronik 31 werden der elektronischen Getriebesteuerung wichtige Betriebsparameter des Motors mitgeteilt. Ebenso erfolgt eine Rückmeldung der Fahrpedalstellung und -aktivität an die elektronische Getriebesteuerung. Daneben verarbeitet die elektronische Getriebesteuerung auch Betriebsparameter des Gruppenschaltgetriebes 1, zum Beispiel die Ölsumpftemperatur (zum Beispiel Warmlaufprogramm, Überschneidungssteuerung der Kupplungen A, B und C usw.).

Durch den Schalthebel 33, der nach dem üblichen Schaltmuster eines 5-Gang-Getriebes mit Rückwärtsgang betätigt wird, werden die Synchronschaltkupplungen im Synchronschaltgetriebe 2 betätigt. Die Ansteuerung der Kupplungen A, B und C im Lastschaltgetriebe 3 erfolgt auf elektro-hydraulischem Wege. Die elektronische Getriebesteuerung 36 liefert Stellsignale an Proportional-Druckregler. Die Lastschaltung dieser Kupplungen erfolgt unter Berücksichtigung der Stellung des Schalthebels 33, des angemeldeten Leistungswunsches sowie der von der Motorelektronik 31 an die elektronische Getriebesteuerung rückgemeldeten Signale. Die elektronische Getriebesteuerung 36 übernimmt vor allem die selbsttätige Zu- und Abschaltung der beiden Overdrive-Gänge, das heißt, sie besorgt die zeitliche Ablaufsteuerung der Schaltung der Kupplungen A, B und C sowie die Anpassung des Drucks in den Kupplungen an das zu übertragende Moment. Bei der Zu- und Abschaltung der Overdrive-Gänge können die Vorteile einer Elektronik in vollem Umfang genutzt werden. Insbesondere können der Kraftstoffverbrauch, die Fahrbarkeit, unterschiedliche Einsatzbedingungen sowie der erzielbare Schaltkomfort optimiert werden.

Es ist selbstverständlich möglich, die Getriebesteuerung nach Fig. 4 zu modifizieren. Beispielsweise kann die mechanische Verbindung 34 entfallen. Die Synchronschaltkupplungen des Synchronschaltgetriebes 2 können dann beispielsweise mit elektrischer oder hydraulischer Hilfskraft betätigt und von der elektronischen Getriebesteuerung 36 direkt angesteuert werden. Vorzugsweise werden die Synchronschaltkupplungen durch Magnetventile betätigt. Vom Synchronschaltgetriebe 2 werden Signale an die elektronische Getriebesteuerung rückgeführt. Insbesondere sind dies Signale, die die Stellung der Schaltstangen der Synchronschaltkupplungen oder auch andere Informationen, wie zum Beispiel die Abtriebsdrehzahl des Gruppenschaltgetriebes, repräsentieren. Es ist ferner zweckmäßig, dem Fahrer den aktuellen Schaltzustand des Gruppenwechselgetriebes visuell anzuzeigen. Dies kann beispielsweise über ein LCD oder ein Overhead-Display geschehen.

Für bestimmte Fahrzustände ist es vorteilhaft, eine Hoch- oder Rückschaltung zu unterbinden. Beispielsweise kann bei einer Bergfahrt eine Hochschaltung unterbleiben.

## Patentansprüche

1. Getriebe, insbesondere für ein Kraftfahrzeug, das als Gruppenschaltgetriebe (1) ausgebildet ist, dessen Basis durch ein Schaltgetriebe mit weniger als fünf Gängen gebildet ist und das durch ein Lastschaltgetriebe (3) ergänzt ist, dadurch **gekennzeichnet,** daß das Schaltgetriebe als Synchronschaltgetriebe (2) ausgebildet ist und sich mit dem Lastschaltgetriebe zu einem Getriebe mit mindestens fünf manuell zu schaltenden Gängen und mindestens zwei Overdrive-Gängen ergänzt, die bei manuell geschaltetem höchsten Gang selbsttätig zu- und abschaltbar sind.

2. Getriebe nach Anspruch 1, dadurch **gekennzeichnet,** daß das Synchronschaltgetriebe (2) und das Lastschaltgetriebe (3) jeweils ein 3-Gang-Getriebe ist und daß aus den möglichen neun Gängen ein handschaltbares 5-Gang-Getriebe mit den zwei Overdrive-Gängen gebildet ist.

3. Getriebe nach Anspruch 1, dadurch **gekennzeichnet,** daß das Lastschaltgetriebe (3) eine Eingangswelle (4), eine Vorgelegewelle (7), eine Zwischenwelle (12), eine Konstante mit zwei Festrädern (5, 6), sowie zwei weitere Festräder (8, 9) und mit diesen im Eingriff stehende Losräder (10, 11) aufweist, die wahlweise über Kupplungen (B, C) mit der Zwischenwelle (12) drehfest verbindbar sind, und daß eine weitere Kupplung (A) vorhanden ist, die die Eingangswelle direkt mit der Zwischenwelle verbindet.

4. Getriebe nach Anspruch 3, dadurch **gekennzeichnet,** daß die Zwischenwelle (12) als Eingang in das Synchronschaltgetriebe (2) dient und ein Festrad (13) trägt, das mit einem weiteren Festrad (14) einer Vorgelegewelle (15) in kämmender Verbindung steht.

5. Getriebe nach Anspruch 4, dadurch **gekennzeichnet,** daß die Zwischenwelle (12) mit einer Abtriebswelle (21) des Synchronschaltgetriebes (2) über eine Synchronschaltkupplung (D) drehfest verbindbar ist.

6. Getriebe nach den Ansprüchen 2, 4 und 5, dadurch **gekennzeichnet,** daß die drei Gänge des Synchronschaltgetriebes (2) aus Festrädern (14, 17 und 18) der Vorgelegewelle (15), dem Festrad (13) der Zwischenwelle (12) und weiteren Losrädern (22, 23), die auf der Abtriebswelle (21) drehbar gelagert sind, gebildet werden.

7. Getriebe nach Anspruch 6, dadurch **gekennzeichnet,** daß das Festrad (13) der Zwischenwelle (12) und die Losräder (20, 22 und 23) der Abtriebswelle (21) über Synchronschaltkupplungen (D, E, F und G) drehfest mit der Abtriebswelle (21) verbindbar sind.

8. Getriebe nach Anspruch 3, dadurch **gekennzeichnet,** daß die Eingangswelle (4) über ein Gehäuse (24) der Kupplung (A) mit einer Hohlwelle (25) drehfest verbunden ist, daß die Hohlwelle (25) zwei Festräder (26, 27) aufweist, die mit Losrädern (28, 29), die auf einer Vorgelegewelle (30) des Gruppenschaltgetriebes (1) drehbar gelagert sind, kämmen.

9. Getriebe nach Anspruch 8, dadurch **gekennzeichnet,** daß den Losrädern (28, 29) Kupplungen (B, C) zugeordnet sind.

10. Getriebe nach Anspruch 9, dadurch **gekennzeichnet,** daß die Kupplungen (B, C) als Trockenreibungskupplungen ausgebildet sind.

11. Getriebe nach Anspruch 2, dadurch **gekennzeichnet,** daß die handschaltbaren fünf Gänge des Gruppenschaltgetriebes (1) über einen Schalthebel (33) manuell anwählbar sind und daß Synchronschaltkupplungen (D, E, F und G) des Synchronschaltgetriebes (2) über eine mechanische Verbindung (34) geschaltet werden.

12. Getriebe nach Anspruch 11, dadurch **gekennzeichnet,** daß das Lastschaltgetriebe (3) über elektro-hydraulische Kupplungen (A, B und C) geschaltet wird.

13. Getriebe nach den Ansprüchen 1 oder 2, dadurch **gekennzeichnet,** daß die selbsttätige Zu- und Abschaltung der zwei Overdrive-Gänge in Abhängigkeit vorgegebener Betriebsparameter durch eine elektronische Getriebesteuerung (36) erfolgt.

14. Getriebe nach den Ansprüchen 1 oder 2, dadurch **gekennzeichnet,** daß die Schaltung des höchsten, manuell anwählbaren Ganges und der beiden Overdrive-Gänge - bei geschlossener Synchronschaltkupplung (D) - über die Kupplungen (A, B und C) im Lastschaltgetriebe (3) des Gruppenschaltgetriebes (1) erfolgt.

15. Getriebe nach den Ansprüchen 3 oder 8 und 9, dadurch **gekennzeichnet,** daß die Kupplungen (A, B und C) als naß laufende Lamellenkupplungen ausgebildet sind, deren Schlupf regelbar ist.

## Claims

1. Transmission, in particular for a motor vehicle, in the form of a group transmission (1), which is basically formed by a shift transmission having less than five speed gears and is supplemented by a power shift transmission (3), characterized in that the shift transmission takes the form of a synchromesh transmission (2) and together with the power shift transmission forms a transmission having at least five manually selectable speed gears and at least two overdrive speed gears which, given manual selection of the highest speed gear, are automatically engageable and disengageable.

2. Transmission according to claim 1, characterized in that the synchromesh transmission (2) and the power shift transmission (3) are in each case a three-speed transmission and that from the possible nine speed gears a manually selectable 5-speed transmission with the two overdrive speed gears is formed.

3. Transmission according to claim 1, characterized in that the power shift transmission (3) comprises an input shaft (4), a countershaft (7), an intermediate shaft (12), a constant with two fixed gear wheels (5, 6), as well as two further fixed gear wheels (8, 9) meshed with two loose gear wheels (10, 11), which are optionally non-rotatably connectable by clutches (B, C) to the intermediate shaft (12), and that a further clutch (A) is provided which connects the input shaft directly to the intermediate shaft.

4. Transmission according to claim 3, characterized in that the intermediate shaft (12) serves as the input into the synchromesh transmission (2) and carries a fixed gear wheel (13), which is in meshing connection with a further fixed gear wheel (14) of a countershaft (15).

5. Transmission according to claim 4, characterized in that the intermediate shaft (12) is non-rotatably connectable by a synchronizing clutch (D) to an output shaft (21) of the synchromesh transmission (2).

6. Transmission according to claims 2, 4 and 5,
characterized in that the three speed gears of the synchromesh transmission (2) are formed by fixed gear wheels (14, 17 and 18) of the countershaft (15), the fixed gear wheel (13) of the intermediate shaft (12) and further loose gear wheels (22, 23), which are rotatably supported on the output shaft (21).

7. Transmission according to claim 6, characterized in that the fixed gear wheel (13) of the intermediate shaft (12) and the loose gear wheels (20, 22 and 23) of the output shaft (21) are connectable non-rotatably to the output shaft (21) by synchronizing clutches (D, E, F and G).

8. Transmission according to claim 3, characterized in that the input shaft (4) is non-rotatably connected by a housing (24) of the clutch (A) to a hollow shaft (25), that the hollow shaft (25) has two fixed gear wheels (26, 27) which mesh with loose gear wheels (28, 29), which are rotatably supported on a countershaft (30) of the group transmission (1).

9. Transmission according to claim 8, characterized in that clutches (B, C) are associated with the loose gear wheels (28, 29).

10. Transmission according to claim 9, characterized in that the clutches (B, C) take the form of dry friction clutches.

11. Transmission according to claim 2, characterized in that the manually selectable five speed gears of the group transmission (1) are manually selectable by means of a shift lever (33) and that synchronizing clutches (D, E, F and G) of the synchromesh transmission (2) are operated by means of a mechanical connection (34).

12. Transmission according to claim 11, characterized in that the power shift transmission (3) is operated by means of electro-hydraulic clutches (A, B and C).

13. Transmission according to claims 1 or 2, characterized in that automatic engagement and disengagement of the two overdrive speed gears is effected in dependence upon preselected operating parameters by means of an electronic transmission controller (36).

14. Transmission according to claims 1 or 2, characterized in that selection of the highest manually selectable speed gear and of the two overdrive speed gears - when the synchronizing clutch (D) is closed - is effected by means of the clutches (A, B and C) in the power shift transmission (3) of the group transmission (1).

15. Transmission according to claims 3 or 8 and 9,
characterized in that the clutches (A, B and C) take the form of wet-operating multiple-disc clutches, the slip of which is controllable.

## Revendications

1. Boîte de vitesses, notamment pour un véhicule automobile, conçue comme une boîte de vitesses groupées (1), dont la base est formée par une boîte de vitesses à moins de cinq vitesses et qui est complétée par une boîte de vitesses commandée en charge (3), **caractérisée** en ce que la boîte de vitesses est conçue comme une boîte de vitesses synchronisées (2), complétée par la boîte de vitesses commandée en charge (3) pour former une boîte ayant au moins cinq vitesses à commande manuelle et au moins deux vitesses à surmultiplication, lesquelles sont enclenchées ou déclenchées automatiquement lorsque la plus grande vitesse a été enclenchée manuellement.

2. Boîte de vitesses selon la revendication 1, **caractérisée** en ce que la boîte de vitesses synchronisées (2) et la boîte de vitesses commandée en charge (3) sont chacune une boîte à trois vitesses et qu'à partir des neuf vitesses possibles est formée une boîte de vitesses à cinq vitesses avec les deux vitesses de surmultiplication commandées manuellement.

3. Boîte de vitesses selon la revendication 1, **caractérisée** en ce que la boîte de vitesses commandée en charge (3) comporte un arbre d'entrée (4), un arbre de transmission (7), un arbre intermédiaire (12), une constante avec deux roues fixes (5, 6) ainsi que deux autre roues fixes (8, 9) et des roues mobiles (10, 11) s'engrenant avec celles-ci, pouvant être reliées de façon non rotative par des couplages (B, C) à l'arbre intermédiaire (12), et en ce qu'un autre couplage (A) existe, reliant directement l'arbre d'entrée à l'arbre intermédiaire.

4. Boîte de vitesses selon la revendication 3, **caractérisée** en ce que l'arbre intermédiaire (12) sert d'entrée dans la boîte de vitesses synchronisée (2) et porte une roue fixe (13) qui s'engrène avec une autre roue fixe (14) d'un arbre de transmission (15).

5. Boîte de vitesses selon la revendication 4, **caractérisée** en ce que l'arbre intermédiaire (12) peut être relié de manière non rotative à un arbre mené (21) de la boîte de vitesses synchronisée (2) au moyen d'un embrayage synchronisée (D).

6. Boîte de vitesses selon les revendications 2, 4 ou 5, **caractérisée** en ce que les trois vitesses de la boîte synchronisée (2) sont formées par des roues fixes (14, 17 et 18) de l'arbre de transmission (15), par la roue fixe (13) de l'arbre intermédiaire (12) et par d'autres roues mobiles (22, 23) montées de manière rotative sur l'arbre mené (21).

7. Boîte de vitesses selon la revendication 6, **caractérisée** en ce que la roue fixe (13) de l'arbre intermédiaire (12) et les roues mobiles (20, 22 et 23) de l'arbre mené (21) peuvent être reliées de manière non rotative à l'arbre mené (21) au moyen d'embrayages synchronisés (D, E, F et G).

8. Boîte de vitesses selon la revendication 3, **caractérisée** en ce que l'arbre d'entrée (4) est relié, de manière non rotative à un arbre creux (25), par l'intermédiaire d'un carter (24) de l'embrayage (A), et en ce que l'arbre creux (25) comporte deux roues fixes (26, 27) s'engrenant avec des roues mobiles (28, 29) montées de manière rotative sur un arbre de transmission (30) de la boîte à vitesses groupées (1).

9. Boîte de vitesses selon la revendication 8, **caractérisée** en ce que des embrayages (B, C) sont attribués aux roues mobiles (28, 29).

10. Boîte de vitesses selon la revendication 9, **caractérisée** en ce que les embrayages (B, C) sont des embrayages secs à friction.

11. Boîte de vitesses selon la revendication 2, **caractérisée** en ce que les cinq vitesses à commande manuelle de la boîte à vitesses groupées (1) peuvent être sélectionnées manuellement au moyen d'un levier (33), et en ce que les embrayages synchronisés (D, E, F et G) de la boîte de vitesses synchrone (2) sont enclenchés au moyen d'une liaison mécanique (34).

12. Boîte de vitesses selon la revendication 11, **caractérisée** en ce que la boîte de vitesses commandée en charge (3) est commandée au moyen d'embrayages électro-hydrauliques (A, B et C)

13. Boîte de vitesses selon la revendication 1 ou 2, **caractérisée** en ce que l'embrayage et le débrayage automatique des deux vitesses de surmultiplication s'effectuent en fonction de paramètres prédéfinis par une commande électronique (36).

14. Boîte de vitesses selon la revendication 1 ou 2, **caractérisée** en ce que l'enclenchement de la plus grande vitesse manuellement enclenchable et des deux vitesses de surmultiplication - avec embrayage synchronisé fermé - s'effectue par les embrayages (A, B et C) dans la boîte de vitesses commandée en charge (3) de la boîte de vitesses groupées.

15. Boîte de vitesses selon les revendications 3 ou 8 et 9, **caractérisée** en ce que les embrayages (A, B et C) sont des embrayages à disques du type humide dont le glissement est réglable.
